(19) Europäisches Patentamt
European Patent Office
Office européen des brevets

(11) **EP 2 622 809 B1**

(12) **FASCICULE DE BREVET EUROPEEN**

(45) Date de publication et mention de la délivrance du brevet:
**01.05.2019 Bulletin 2019/18**

(21) Numéro de dépôt: **11779765.4**

(22) Date de dépôt: **30.09.2011**

(51) Int Cl.:
*H04B 3/54* (2006.01)     *H04B 7/0413* (2017.01)
*H04B 15/00* (2006.01)     *H04L 25/02* (2006.01)
*H04L 25/03* (2006.01)

(86) Numéro de dépôt international:
**PCT/FR2011/052282**

(87) Numéro de publication internationale:
**WO 2012/042182 (05.04.2012 Gazette 2012/14)**

(54) **LIMITATION DE BRUIT POUR UNE TRANSMISSION DANS UN CANAL A VOIES MULTIPLES**

RAUSCHUNTERDRÜCKUNG FÜR ÜBERTRAGUNGEN IN EINEM MEHRPFADKANAL

NOISE LIMITATION FOR TRANSMISSION IN A MULTI-PATH CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2010 FR 1057924**

(43) Date de publication de la demande:
**07.08.2013 Bulletin 2013/32**

(73) Titulaire: **Orange**
**75015 Paris (FR)**

(72) Inventeurs:
• **PAGANI, Pascal**
**F-22200 Guingamp (FR)**
• **HASHMAT, Rehan**
**F-22300 Lannion (FR)**

(56) Documents cités:
**EP-A1- 1 956 718     US-A1- 2004 139 137**

• BAYKAS T ET AL: "Generalized decorrelating discrete-time rake receiver", IEEE TRANSACTIONS ON WIRELESS COMMUNICATIONS, IEEE SERVICE CENTER, PISCATAWAY, NJ, US, vol. 6, no. 12, 1 décembre 2007 (2007-12-01), pages 4268-4274, XP011198722, ISSN: 1536-1276, DOI: DOI:10.1109/TWC.2007.060392

• MAEDA N ET AL: "Throughput comparison between vsf-ofcdm and ofdm considering effect of sectorization in forward link broadband packet wireless access", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 1, 24 septembre 2002 (2002-09-24), pages 47-51, XP010608514, DOI: DOI:10.1109/VETECF.2002.1040299 ISBN: 978-0-7803-7467-6

• BURG A ET AL: "Performance of MIMO-extended UMTS-FDD downlink comparing space-time RAKE and linear equalizer", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, 6 octobre 2003 (2003-10-06), pages 473-477VOL.1, XP010701001, DOI: DOI:10.1109/VETECF.2003.1285062 ISBN: 978-0-7803-7954-1

• LEANDRO D'ORAZIO ET AL: "An Adaptive Minimum-BER Approach for Multi-User Detection in STBC-MIMO MC-CDMA Systems", GLOBAL TELECOMMUNICATIONS CONFERENCE, 2007. GLOBECOM '07. IEEE, IEEE, PISCATAWAY, NJ, USA, 1 novembre 2007 (2007-11-01), pages 3427-3431, XP031196578, ISBN: 978-1-4244-1042-2

• MAROUSIS A ET AL: "Adaptive turbo code-multiplexed pilot channel estimation for MIMO MC-CDMA systems in highly time-variant propagation channels", ANTENNAS AND PROPAGATION, 2009. EUCAP 2009. 3RD EUROPEAN CONFERENCE ON, IEEE, PISCATAWAY, NJ, USA, 23 mars 2009 (2009-03-23), pages 3414-3418, XP031470504, ISBN: 978-1-4244-4753-4

**Description**

Le domaine de l'invention est celui de la transmission de données. On peut distinguer deux grandes classes de communications : les communications filaires et les communications sans fil.

Dans la plupart des cas, le canal de transmission entre un émetteur et un récepteur a une capacité limitée et génère des atténuations et des chemins de propagation multiples. Il est donc nécessaire d'optimiser le traitement du signal pour augmenter le débit et la qualité de service.

La technique dite MIMO (Multiple Input Multiple Output) est bien connue dans les communications sans fil pour augmenter la capacité du canal, en présence de chemins de propagation multiples. On utilise plusieurs antennes de réception et/ou d'émission, de manière à exploiter la diversité spatiale générée par les chemins de propagation multiples.

Plus récemment, la technique MIMO a été étendue aux communications filaires, notamment pour les systèmes PLC (Power Line Communication) également appelés CPL (Courant Porteur en Ligne).

Par exemple, l'article de Giovaneli, Honary et Farrell intitulé « Improved space time coding applications for PLC channels », International Symposium on Power Line Communications and its Applications, 2003, est dédié à des réseaux électriques triphasés à quatre fils.

Le gain en termes de capacité de canal est exposé par exemple dans « MIMO capacity of inhome PLC links up to 100 MHz », IEEE WSPLC 2009, par Hasmat et Pagani.

Dans un système de type MIMO chaque capteur en réception est affecté par du bruit, ce qui corrompt les données transmises.

Dans un système sans fil, les différentes antennes de réception ne sont pas physiquement connectées, et sont situées à distance les unes des autres pour tirer bénéfice de la diversité spatiale. Ainsi, les signaux de bruits reçus sur les antennes de réception sont indépendants et non corrélés.

La technique MIMO pour système filaire dérivant étroitement de celle pour système sans fil, on considère généralement que les signaux de bruit reçus sur les différents capteurs de réception sont également indépendants et non corrélés dans un système filaire. Les méthodes de traitement de signal dans les systèmes filaires sont donc basées sur l'hypothèse de bruits indépendants et non corrélés et aucune méthode n'a été développée pour limiter les effets de bruits corrélés dans un système MIMO.

Cependant, les inventeurs ont constaté par des mesures réalisées en laboratoire que les signaux de bruits reçus sur les différents capteurs de réception sont hautement corrélés dans un système MIMO filaire.

Il en résulte que les méthodes classiques pour augmenter la capacité du canal dans un système MIMO ne sont pas optimales puisque basées sur une hypothèse fausse.

L'article « Generalized Decorrelating Discrete-Time RAKE Receiver » de Baykas T et al. (IEEE Transactions on Wireless Communications, Vol. 6, No. 12, Décembre 2007) introduit un récepteur de type RAKE à temps discret, mettant en oeuvre un procédé uniquement mis en oeuvre au niveau du récepteur, ce procédé étant basé sur le désétalement de signaux dans des corrélateurs situés au niveau de ce récepteur.

L'article « Throughput comparison between VSF-OFCDM and OFDM considering effect of sectorization in forward link broadband packet wireless access » de Maeda N. et al. (Vehicular Technology Conference Proceedings, Vancouver, Canada, Sept. 24-28, 2002) porte sur la comparaison de capacité d'un lien radio entre différents types de multiplexages utilisés dans un environnement multi-cellulaires.

Enfin, l'article « Performance of MIMO-extended UMTS-FDD downlink comparing space-time RAKE and linear equalizer » de Burg A et al. (Vehicular Technology Conference, IEEE 58th Orlando, FL, USA, 6 octobre 2003) s'intéresse aux performances d'un lien radio descendant UMTS-FDD dans lesquelles des antennes MIMO de type 2x2 et 4x4, ainsi qu'un récepteur de type RAKE, sont employés.

La présente invention a pour but de résoudre les inconvénients de la technique antérieure.

A cette fin, l'invention propose un procédé de limitation de bruit dans une pluralité de signaux reçus dans un récepteur à réceptions multiples, selon la revendication 1.

L'invention concerne aussi un procédé de réception d'une pluralité de signaux dans un récepteur à réceptions multiples, selon la revendication 3.

L'invention concerne encore un procédé d'émission d'au moins un signal à émettre par un émetteur et destiné à être reçu dans un récepteur à réceptions multiples, selon la revendication 4.

L'invention concerne aussi un récepteur à réceptions multiples, apte à recevoir une pluralité de signaux, selon la revendication 6.

L'invention concerne aussi un émetteur d'au moins un signal à émettre vers un récepteur à réceptions multiples apte à recevoir une pluralité de signaux, selon la revendication 7.

Ces différents équipements présentent des avantages analogues à ceux des procédés précédemment présentés.

Dans un mode particulier de réalisation, les différentes étapes des procédés selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé tel que décrit ci-dessus, selon la revendication 8.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus, selon la revendication 9.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles :

- la figure 1 représente un mode de réalisation de dispositifs selon l'invention,
- la figure 2 est une représentation schématique d'un système MIMO, selon la technique antérieure,
- la figure 3 est une représentation schématique d'un système MIMO avec une traitement « eigen beamforming », selon la technique antérieure,
- la figure 4 est une représentation schématique d'un système MIMO selon l'invention, et
- la figure 5 représente un mode de réalisation de procédés d'émission et de réception selon l'invention.

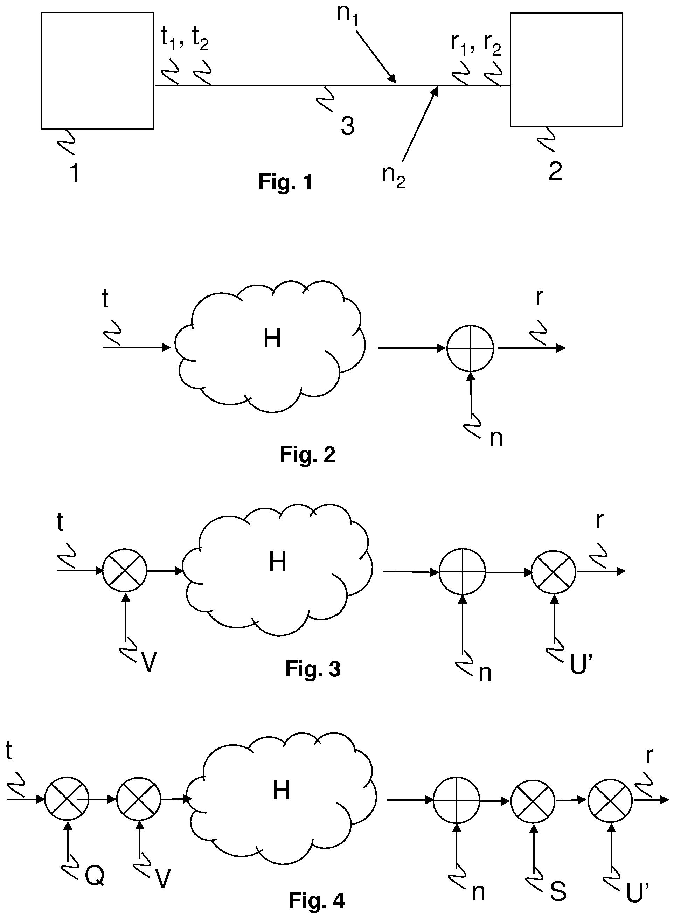

Selon un mode de réalisation de l'invention représenté à la **figure 1,** les équipements implémentant l'invention sont un émetteur 1 de type MIMO et un récepteur 2 de type MIMO. L'émetteur 1 et le récepteur 2 sont reliés par un canal de transmission 3.

L'émetteur 1 comporte au moins un port d'émission et transmet au moins un signal à destination du récepteur, via le canal de transmission 3.

Le récepteur 2 comporte une pluralité de ports de réception et reçoit un signal sur chaque port de réception.

L'émetteur et le récepteur ont une structure matérielle classique, et comportent des modules de calculs implémentés sous la forme de processeurs et de mémoires ainsi que des modules d'émission et de réception de signal.

Dans le mode préféré de réalisation, le canal de transmission 3 est un canal filaire. Il peut s'agir d'un câble coaxial, d'une ligne de transmission téléphonique ou encore d'une liaison de type PLC. L'invention est particulièrement avantageuse dans ce cas, mais elle s'applique cependant à tout type de canal de transmission, filaire ou non filaire. Le canal de transmission comporte des voies multiples entre l'au moins un port d'émission et la pluralité de ports de réception.

Selon l'invention, les signaux reçus sur chaque port du récepteur 2 sont post-traités pour changer les caractéristiques statistiques des bruits reçus.

En outre, les signaux transmis pas l'émetteur sont pré-traités pour annuler l'effet du post-traitement sur la partie utile du signal.

Dans la suite, on suppose que l'émetteur transmet deux signaux $t_1$ et $t_2$ sur deux canaux et le récepteur reçoit deux signaux $r_1$ et $r_2$ sur deux ports de réception. Les signaux reçus sont bruités, et les bruits $n_1$ et $n_2$ sont corrélés. Tous les signaux considérés sont variables avec le temps. Tous les traitements sont de préférence faits de manière numérique, sur des signaux préalablement échantillonnés.

En référence à la **figure 2,** le système MIMO est schématisé.

On note t le vecteur colonne des signaux transmis, r le vecteur colonne des signaux reçus et n le vecteur colonne des signaux de bruits.

Chaque canal entre un port de l'émetteur et un port du récepteur peut être représenté par une fonction de transfert. Ainsi, le canal entre un premier port d'émission et un premier port de réception est noté $h_{11}$, le canal entre un premier port d'émission et un deuxième port de réception est noté $h_{12}$ et ainsi de suite. Il y a autant de fonction de transfert que de paires de ports d'émission et de réception. Dans l'exemple choisi, il existe quatre fonctions de transfert.

On note H la matrice des fonctions de transfert entre port d'émission et port de réception. Dans l'exemple choisi, H est une matrice carrée de 2x2 coefficients.

$$H = \begin{pmatrix} h_{11} & h_{21} \\ h_{12} & h_{22} \end{pmatrix}$$

La relation entre les signaux émis et les signaux reçus dans le système MIMO est donc :

$$r = Ht + n$$

La **figure 3** représente une application classique de la théorie dite « eigen beamforming » au système MIMO. Cette théorie permet une formation de faisceau selon les modes propres du canal.

Cette théorie enseigne que pour maximiser la sortie, des signaux peuvent être transmis en parallèle, à condition que la matrice H soit conditionnée pour fournir deux canaux indépendants.

Cela est effectué en appliquant une décomposition en valeur singulière, dite SVD d'après l'anglais « Singular Value Decomposition ». Cela produit trois matrices U, D et V telles que la relation H = UDV' soit vraie.

Les matrices U et V sont des matrices unitaires, D est une matrice diagonale et V' est la matrice transposée conjuguée de la matrice V.

On applique tout d'abord la matrice de prétraitement V au signal transmis et la matrice de post-traitement U' au signal reçu ce qui donne la formule :

$$r = U'HVt + U'n = Dt + U'n$$

Par commodité, on conserve les notations t et r en tant que variables génériques qui représentent respectivement les signaux transmis et reçus. Cependant, il n'y a pas égalité entre ces variables avant et après le traitement de la figure 3.

Il est à noter que la partie utile du signal Dt permet la transmission de deux signaux indépendants. Le bruit reçu a été changé de n en U'n.

En référence à la **figure 4,** on applique enfin une matrice S en réception et une matrice Q à l'émission.

La matrice S a pour but de limiter l'effet des bruits corrélés. Elle assure une décorrélation des signaux de bruit.

De préférence la matrice S varie avec le temps, ou avec la fréquence, ou encore avec le temps et la fréquence, par exemple en fonction d'une phase $\phi$ qui varie dans l'intervalle $[-\pi, \pi[$ à chaque échantillon temporel et/ou fréquentiel.

$$S = \begin{pmatrix} 1 & 0 \\ 0 & e^{i\phi} \end{pmatrix}$$

La phase peut varier selon une séquence prédéfinie connue de l'émetteur. Par exemple, un nombre fixe d'états de phase est prédéfini, chaque état étant sélectionné par un générateur de séquence pseudo-aléatoire qui peut être implémenté sous la forme d'un registre à décalage.

Ainsi les signaux de bruits après multiplication par la matrice S présentent des statistiques non corrélées.

La décorrélation des bruits a pour conséquence directe une limitation de ceux-ci. En effet, on a vu plus haut qu'à l'issue du traitement précédent (eigen beamforming), le bruit reçu a été changé de n en U'n. Dans l'exemple du bruit n comportant deux composantes, si celles-ci sont corrélées, l'une des composantes du bruit U'n aura une puissance augmentée tandis que l'autre aura une puissance diminuée.

Si l'on tient compte du bruit supplémentaire au récepteur, tel que le bruit de quantification ou le bruit des composants de réception, alors globalement la puissance du bruit va augmenter, car la composante du bruit U'n qui aura baissé sera noyée dans le bruit supplémentaire au récepteur.

Au contraire, grâce à l'invention, les signaux de bruit sont décorrélés. Ainsi le traitement eigen beamforming n'aura pas d'impact sur la puissance du bruit. Par conséquent, on évite l'augmentation du bruit qui aurait existé sans la décorrélation.

La matrice Q utilisée à l'émission a pour but de pré-compenser l'effet de la matrice S sur le signal utile.

Le signal reçu est donné par la formule :

$$r = U'SHVQt + U'Sn$$

Comme précédemment, on conserve les notations t et r en tant que variables génériques qui représentent respectivement les signaux transmis et reçus. Cependant, il n'y a pas égalité entre ces variables avant et après le traitement de la figure 4.

La matrice Q est de la forme :

$$Q = D^{-1}U'S^{-1}UD$$

Où $D^{-1}$ et $S^{-1}$ sont les matrices respectivement inverses de D et S. Il faut donc que la matrice S soit inversible, ce qui est effectivement le cas pour l'exemple de matrice S donné plus haut.

On rappelle que D est une matrice diagonale, le calcul de son inverse est donc immédiat.

Au final on a :

$$r = Dt + U'Sn$$

On obtient donc une décorrélation des signaux de bruit en réception, sans effet sur le ou les signaux utile(s) transmis.

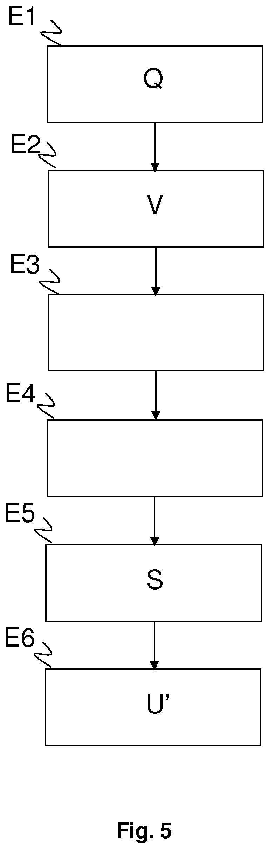

La **figure 5** représente les procédés d'émission et de réception selon l'invention. On conserve les mêmes notations que plus haut.

Les étapes E1 à E3 sont effectuées dans l'émetteur 1.

L'étape E1 est le prétraitement du signal ou des signaux t à transmettre. Le prétraitement comporte l'application de la matrice Q précédemment présentée au signal ou aux signaux t.

L'étape suivante E2 est le traitement eigen beamforming par application de la matrice V au signal ou aux signaux prétraités.

Il faut noter qu'en pratique, une fois que les matrices Q et V sont calculées, on peut calculer directement le produit VQ, que l'on note par exemple W. Dans ce cas, les étapes E1 et E2 se regroupent en une seule étape, qui est l'application de la matrice W.

L'étape suivante E3 est la transmission proprement dite, qui est classique et ne sera pas détaillée ici.

Les étapes suivantes sont effectuées dans le récepteur 2.

L'étape E4 est la réception des signaux sur les différents ports de réception du récepteur.

L'étape suivante E5 est le post-traitement des signaux reçus par application de la matrice S.

L'étape suivante E6 est le traitement eigen beamforming par application de la matrice U' aux signaux post-traités.

Là aussi, on peut calculer directement le produit U'S, que l'on note par exemple Y. Dans ce cas, les étapes E5 et E6 se regroupent en une seule étape, qui est l'application de la matrice Y.

Grâce à l'application de la matrice S, les signaux de bruits en réception sont décorrélés. Comme on l'a vu précédemment, cette décorrélation a pour effet direct d'éviter une augmentation de bruit inhérente aux traitements effectués et par conséquent l'invention permet une limitation du bruit en réception.

**Revendications**

1. Procédé de limitation de bruit dans une pluralité de signaux émis par un émetteur et reçus $(r_1,r_2)$ dans un récepteur à réceptions multiples (2), ledit procédé comportant:une étape de décorrélation de bruits $(n_1,n_2)$ présents dans les signaux reçus, ledit procédé **caractérisé en outre en ce que** ladite étape de décorrélation comporte une multiplication (E5) des bruits $(n_1,n_2)$ par des premiers coefficients variant avec le temps ou avec la fréquence, ou encore avec le temps et la fréquence, dépendant d'une phase variant selon une séquence prédéfinie ; et une étape de prétraitement, effectuée dans l'émetteur, comportant une multiplication (E1) desdits signaux avant leur émission $(t_1,1_2)$ par des deuxièmes coefficients déterminés en fonction des premiers coefficients de sorte à pré-compenser l'effet des premiers coefficients sur la partie utile des signaux reçus $(r_1,r_2)$.

2. Procédé selon la revendication 1, **caractérisé en ce que** des états de phases sont définis en un nombre prédéterminé et la phase de chaque premier coefficient est déterminée par un générateur de séquence pseudo-aléatoire.

3. Procédé de réception d'une pluralité de signaux dans un récepteur à réceptions multiples, ledit procédé comportant une étape de réception d'une pluralité de signaux $(r_1,r_2)$ et une étape de décorrélation de bruits $(n_1,n_2)$ présents dans les signaux reçus, effectuée dans le récepteur, ledit procédé **caractérisé en outre en ce que** ladite étape de décorrélation comporte une multiplication (E5) des bruits $(n_1,n_2)$ par des premiers coefficients variant avec le temps ou avec la fréquence, ou encore avec le temps et la fréquence, dépendant d'une phase variant selon une séquence prédéfinie, lesdits premiers coefficients étant liés à des deuxièmes coefficients multipliés avec lesdits signaux avant leur émission $(t_1,t_2)$ lors d'une étape de prétraitement, de sorte à ce que l'effet des premiers coefficients sur la partie utile des signaux reçus soit pré-compensé.

4. Procédé d'émission d'au moins un signal $(t_1,t_2)$ à émettre par un émetteur (1) et destiné à être reçu dans un récepteur à réceptions multiples (2), **caractérisé en ce qu'**il comporte une étape de prétraitement de l'au moins un signal à émettre, effectuée dans l'émetteur (1), ladite étape de prétraitement comportant une multiplication (E1) de l'au moins un signal à émettre par des premiers coefficients variant avec le temps ou avec la fréquence, ou encore avec le temps et la fréquence, lesdits premiers coefficients étant déterminés en fonction de deuxièmes coefficients, dépendant d'une phase variant selon une séquence prédéfinie et appliqués en réception du au moins un signal pour décorréler les bruits $(n_1,n_2)$ présents dans le au moins un signal reçu $(r_1,r_2)$, de sorte à pré-compenser l'effet des deuxièmes coefficients sur la partie utile du au moins un signal reçu $(r_1,r_2)$.

5. Procédé selon la revendication 4, **caractérisé en ce que** des états de phases sont définis en un nombre prédéterminé et la phase de chaque deuxième coefficient est déterminée par un générateur de séquence pseudo-aléatoire.

6. Récepteur à réceptions multiples, apte à recevoir une pluralité de signaux, ledit récepteur comportant des moyens de décorrélation de bruits $(n_1,n_2)$, présents dans les signaux reçus $(r_1,r_2)$, ledit récepteur **caractérisé en ce que** lesdits moyens de décorrélation comportent des moyens de multiplication des bruits par des premiers coefficients variant avec le temps ou avec la fréquence, ou encore avec le temps et la fréquence, dépendant d'une phase variant selon une séquence prédéfinie, lesdits premiers coefficients étant liés à des deuxièmes coefficients multipliés avec lesdits signaux avant leur émission $(t_1,t_2)$ lors d'une étape de prétraitement, de sorte à ce que l'effet des premiers coefficients sur la partie utile des signaux reçus soit pré-compensé.

7. Emetteur d'au moins un signal $(t_1,t_2)$, à émettre vers un récepteur à réceptions multiples apte à recevoir une pluralité de signaux, **caractérisé en ce qu'**il comporte des moyens de prétraitement de l'au moins un signal à émettre, lesdits moyens de prétraitement comportant des moyens de multiplication de l'au moins un signal à émettre par des premiers coefficients variant avec le temps ou avec la fréquence, ou encore avec le temps et la fréquence, lesdits premiers coefficients étant déterminés en fonction de deuxièmes coefficients dépendant d'une phase variant selon une séquence prédéfinie et appliqués en réception du au moins un signal pour décorréler les bruits ($n_1$,$n_2$) présents dans le au moins un signal reçu ($r_1$,$r_2$), de sorte à pré-compenser l'effet des deuxièmes coefficients sur la partie utile du au moins un signal reçu.

8. Programme d'ordinateur comportant des instructions pour l'exécution des étapes du procédé selon l'une quelconque des revendications 1 à 5 lorsque ledit programme est exécuté par un ordinateur.

9. Support d'enregistrement lisible par un ordinateur sur lequel est enregistré un programme d'ordinateur selon la revendication 8.


**Patentansprüche**

1. Verfahren zur Rauschunterdrückung in einer Vielzahl von Signalen, die von einem Sender gesendet und in einem Mehrpfadempfänger (2) empfangen werden ($r_1$, $r_2$), wobei das Verfahren einen Schritt der Dekorrelation von Rauschen ($n_1$, $n_2$), das in den empfangenen Kanälen vorhanden ist, umfasst, wobei das Verfahren ferner **dadurch gekennzeichnet ist, dass** der Dekorrelationsschritt

eine Vervielfachung (E5) des Rauschens ($n_1$, $n_2$) durch erste Koeffizienten, die mit der Zeit oder mit der Frequenz variieren, oder mit der Zeit und der Frequenz umfasst, in Abhängigkeit von einer Phase, die nach einer vordefinierten Sequenz variiert; und einen Vorbearbeitungsschritt umfasst, der in dem Sender durchgeführt wird, umfassend eine Vervielfachung (E1) der Signale vor ihrem Senden ($t_1$, $t_2$) durch zweite Koeffizienten, die in Abhängigkeit von den ersten Koeffizienten derart bestimmt werden, dass sie die Auswirkung der ersten Koeffizienten auf den nützlichen Teil der empfangenen Signale ($r_1$, $r_2$) ausgleichen.

2. Verfahren nach Anspruch 1, **dadurch gekennzeichnet, dass** Phasenzustände in einer vorbestimmten Zahl definiert werden, und die Phase jedes ersten Koeffizienten durch einen Generator einer pseudozufälligen Sequenz bestimmt wird.

3. Verfahren zum Empfangen einer Vielzahl von Signalen in einem Mehrpfadempfänger, wobei das Verfahren einen Schritt des Empfangs einer Vielzahl von Signalen ($r_1$, $r_2$) und einen Schritt der Dekorrelation von Rauschen ($n_1$, $n_2$), das in den empfangenen Signalen vorhanden ist, umfasst, der in dem Empfänger durchgeführt wird, wobei das Verfahren ferner **dadurch gekennzeichnet, ist, dass** der Dekorrelationsschritt einen Schritt der Vervielfachung (E5) des Rauschens ($n_1$, $n_2$) durch erste Koeffizienten, die mit der Zeit oder mit der Frequenz variieren, oder auch mit der Zeit und der Frequenz umfasst, in Abhängigkeit von einer Phase, die nach einer vordefinierten Sequenz variiert, wobei die ersten Koeffizienten mit zweiten Koeffizienten verbunden sind, die mit den Signalen vor ihrem Senden ($t_1$, $t_2$) in einem Vorbearbeitungsschritt vervielfacht wurden, so dass die Auswirkung der ersten Koeffizienten auf den nützlichen Teil der empfangenen Signale vorausgeglichen wird.

4. Verfahren zum Senden mindestens eines Signals ($t_1$, $t_2$), das von einem Sender (1) zu gesenden und dazu bestimmt ist, in einem Mehrpfadempfänger (2) empfangen zu werden, **dadurch gekennzeichnet, dass** es einen Schritt der Vorbearbeitung des mindestens einen zu gesendenden Signals umfasst, der in dem Sender (1) durchgeführt wird, wobei der Vorbearbeitungsschritt eine Vervielfachung (E1) des mindestens einen zu gesendenden Signals durch erste Koeffizienten, die mit der Zeit oder mit der Frequenz variieren, oder auch mit der Zeit und der Frequenz umfasst, wobei die ersten Koeffizienten in Abhängigkeit von zweiten Koeffizienten bestimmt werden, die von einer Phase abhängen, die nach einer vordefinierten Sequenz variiert, und die beim Empfang des mindestens einen Signals angewandt werden, um das in dem mindestens einen empfangenen Signal ($r_1$, $r_2$) vorhandene Rauschen ($n_1$, $n_2$) zu dekorrelieren, um die Auswirkung der zweiten Koeffizienten auf den nützlichen Teil des mindestens einen empfangenen Signals ($r_1$, $r_2$) vorauszugleichen.

5. Verfahren nach Anspruch 4, **dadurch gekennzeichnet, dass** Phasenzustände in einer vorbestimmten Zahl definiert werden, und die Phase jedes zweiten Koeffizienten von einem Generator einer pseudozufälligen Sequenz bestimmt wird.

6. Mehrpfadempfänger, der geeignet ist, eine Vielzahl von Signalen zu empfangen, wobei der Empfänger Mittel zur Dekorrelation von Rauschen ($n_1$, $n_2$), das in den empfangenen Signalen ($r_1$, $r_2$) vorhanden ist, umfasst, wobei der Empfänger **dadurch gekennzeichnet ist, dass** die Dekorrelationsmittel Mittel zur Vervielfachung des Rauschens durch erste Koeffizienten, die mit der Zeit oder mit der Frequenz variieren, oder auch mit der Zeit und der Frequenz umfasst, in Abhängigkeit von einer Phase, die nach einer vordefinierten Sequenz variiert, wobei die ersten Koeffizienten mit zweiten Koeffizienten verbunden sind, die mit den Signalen vor ihrem Senden ($t_1$, $t_2$) in einem Vorbearbeitungsschritt vervielfacht wurden, so dass die Auswirkung der ersten Koeffizienten auf den nützlichen Teil der empfangenen Signale vorausgeglichen wird.

7. Sender mindestens eines Signals ($t_1$, $t_2$), das zu einem Mehrpfadempfänger zu senden ist, der geeignet ist, eine Vielzahl von Signalen zu empfangen, **dadurch gekennzeichnet, dass** er Mittel zur Vorbearbeitung des mindestens einen zu gesendenden Signals umfasst, wobei die Mittel zur Vorbearbeitung Mittel zur Vervielfachung des mindestens einen zu gesendenden Signals durch erste Koeffizienten, die mit der Zeit oder mit der Frequenz variieren, oder auch mit der Zeit und der Frequenz umfassen, wobei die ersten Koeffizienten in Abhängigkeit von zweiten Koeffizienten bestimmt werden, die von einer Phase abhängen, die nach einer vordefinierten Sequenz variiert, und die beim Empfang des mindestens einen Signals angewandt werden, um das in dem mindestens einen empfangenen Signal ($r_1$, $r_2$) vorhandene Rauschen ($n_1$, $n_2$) zu dekorrelieren, um die Auswirkung der zweiten Koeffizienten auf den nützlichen Teil des mindestens einen empfangenen Signals vorauszugleichen.

8. Computerprogramm, umfassend Anweisungen für die Ausführung der Schritte des Verfahrens nach einem der Ansprüche 1 bis 5, wenn das Programm von einem Computer ausgeführt wird.

9. Von einem Computer lesbarer Aufzeichnungsträger, auf dem ein Computerprogramm nach Anspruch 8 aufgezeichnet ist.

**Claims**

1. Method of limiting noise in a plurality of signals emitted by an emitted and received ($r_1$, $r_2$) in a receiver with multiple receptions (2), said method comprising a step of decorrelating noise ($n_1$, $n_2$) present in the signals received, said method being further **characterized in that** said decorrelating step comprises a multiplication (E5) of the noise ($n_1$, $n_2$) by first coefficients varying with time or with frequency, or else with time and with frequency, depending on a phase varying according to a predefined sequence; and a step of preprocessing, performed in the emitter, comprising a multiplication (E1) of said signals before their emission ($t_1$, $t_2$) by second coefficients determined as a function of the first coefficients in such a way as to pre-compensate the effect of the first coefficients on the useful part of the signals received ($r_1$, $r_2$).

2. Method according to Claim 1, **characterized in that** phase states are defined in a predetermined number and the phase of each first coefficient is determined by a pseudo-random sequence generator.

3. Method of receiving a plurality of signals in a receiver with multiple receptions, said method comprising a step of receiving a plurality of signals ($r_1$, $r_2$) and a step of decorrelating noise ($n_1$, $n_2$) present in the signals received, performed in the receiver, said method being further **characterized in that** said step of decorrelating comprises a multiplication (E5) of the noise ($n_1$, $n_2$) by first coefficients varying with time or with frequency, or else with time and with frequency, depending on a phase varying according to a predefined sequence, said first coefficients being related to second coefficients multiplied with said signals before their emission ($t_1$, $t_2$) during a preprocessing step, in such a way that the effect of the first coefficients on the useful part of the signals received is pre-compensated.

4. Method of emitting at least one signal ($t_1$, $t_2$) to be emitted by an emitter (1) and intended to be received in a receiver with multiple receptions (2), **characterized in that** it comprises a step of pre-processing the at least one signal to be emitted, performed in the emitter (1), said pre-processing step comprising a multiplication (E1) of the at least one signal to be emitted by first coefficients varying with time or with frequency, or else with time and with frequency, said first coefficients being determined as a function of second coefficients, depending on a phase varying according to a predefined sequence and which are applied in reception of the at least one signal so as to decorrelate the noise ($n_1$, $n_2$) present in the at least one signal received ($r_1$, $r_2$), in such a way as to pre-compensate the effect of the second coefficients on the useful part of the at least one signal received ($r_1$, $r_2$).

5. Method according to Claim 4, **characterized in that** phase states are defined in a predetermined number and the phase of each second coefficient is determined by a pseudo-random sequence generator.

6. Receiver with multiple receptions, able to receive a plurality of signals, said receiver comprising means for decorrelating noise ($n_1$, $n_2$) present in the signals received ($r_1$, $r_2$), said receiver being **characterized in that** said decorrelating means comprise means for multiplying the noise by first coefficients varying with time or with frequency, or else with time and with frequency, depending on a phase varying according to a predefined sequence, said first coefficients being related to second coefficients multiplied with said signals before their emission ($t_1$, $t_2$) during a preprocessing step, in such a way that the effect

**EP 2 622 809 B1**

of the first coefficients on the useful part of the signals received is pre-compensated.

7. Emitter of at least one signal $(t_1, t_2)$ to be emitted to a receiver with multiple receptions able to receive a plurality of signals, **characterized in that** it comprises means for preprocessing the at least one signal to be emitted, said preprocessing means comprising means for multiplying the at least one signal to be emitted by first coefficients varying with time or with frequency, or else with time and with frequency, said first coefficients being determined as a function of second coefficients depending on a phase varying according to a predefined sequence and which are applied in reception of the at least one signal so as to decorrelate the noise $(n_1, n_2)$ present in the at least one signal received $(r_1, r2)$ in such a way as to pre-compensate the effect of the second coefficients on the useful part of the at least one signal received.

8. Computer program comprising instructions for the execution of the steps of the method according to any one of Claims 1 to 5 when said program is executed by a computer.

9. Recording medium readable by a computer on which is recorded a computer program according to Claim 8.

Fig. 1

Fig. 2

Fig. 3

Fig. 4

E1

Q

E2

V

E3

E4

E5

S

E6

U'

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HONARY ; FARRELL.** Improved space time coding applications for PLC channels. *International Symposium on Power Line Communications and its Applications,* 2003
- MIMO capacity of inhome PLC links up to 100 MHz. *IEEE WSPLC,* 2009
- **BAYKAS T et al.** Generalized Decorrelating Discrete-Time RAKE Receiver. *IEEE Transactions on Wireless Communications,* Décembre 2007, vol. 6 (12
- **MAEDA N. et al.** Throughput comparison between VSF-OFCDM and OFDM considering effect of sectorization in forward link broadband packet wireless access. *Vehicular Technology Conference Proceedings,* 24 Septembre 2002
- **BURG A et al.** Performance of MIMO-extended UMTS-FDD downlink comparing space-time RAKE and linear equalizer. *Vehicular Technology Conference, IEEE 58th Orlando,* 06 Octobre 2003